# EUROPEAN PATENT APPLICATION

(11) **EP 4 841 083 A1**
(43) Date of publication of application: **18.11.2026**
(21) Application number: 26168981.4
(22) Date of filing: 30.03.2026
(51) Int. Cl.: F02C 3/22, F02C 7/14, F02C 7/18, F02C 7/224

(54) **GAS TURBINE ENGINE FUEL SYSTEM**

(30) Priority: 12.05.2025 GB 202507223
(71) Applicant: Rolls-Royce plc, London N1 9FX (GB)
(72) Inventor: Palmer, Chloe Jo, Derby, DE24 8BJ (GB); Coulson, James, Derby, DE24 8BJ (GB)
(74) Representative: Rolls-Royce plc

(57) **Abstract**

A fuel system for an aircraft gas turbine engine (201). The fuel system comprises a main fuel conduit (206) configured to deliver hydrogen fuel to a combustor (203) of the gas turbine engine (201), a first heat exchange conduit (211) configured to circulate gaseous hydrogen in a first closed loop and a second heat exchange conduit (219) configured to circulate an inert heat exchange medium in a second closed loop. A first heat exchanger (208) is provided, which is configured to exchange heat between hydrogen in the main fuel conduit (206) and hydrogen (211) in the first heat exchange conduit. A second heat exchanger (216) is also provided and is configured to exchange heat between hydrogen in the first heat exchange conduit (206) and the inert heat exchange medium in the second closed loop.

## Description

### TECHNICAL FIELD

This disclosure relates to a fuel system for a hydrogen fuelled gas turbine engine, an engine incorporating such a fuel system, and methods of operating such a fuel system.

### BACKGROUND

In order to limit emissions of carbon dioxide, use of hydrogen, methane or ammonia as an alternative to liquid hydrocarbon fuel in gas turbine engines has historically only been practical in land-based installations. However, more recently there has been interest in aircraft powered by such fuels stored at cryogenic temperatures, as either a compressed gas, a supercritical fluid, or a liquid.

Challenges of operating such gas turbine engines include managing temperatures of the cryogenically cooled fuel and other engine fluids such as oil. In particular, it may be difficult to avoid overheating or overcooling of hydrogen fuel or other engine fluids while ensuring operation over the whole flight envelope. Furthermore, hydrogen is highly flammable, and this may pose additional hazards.

### SUMMARY

In accordance with a first aspect there is provided a fuel system for an aircraft gas turbine engine, the fuel system comprising:
a main fuel conduit configured to deliver hydrogen fuel to a combustor of the gas turbine engine;
a first heat exchange conduit configured to circulate gaseous hydrogen in a first closed loop;
a second heat exchange conduit configured to circulate an inert heat exchange medium in a second closed loop;
a first heat exchanger configured to exchange heat between hydrogen in the main fuel conduit and hydrogen in the first heat exchange conduit; and
a second heat exchanger configured to exchange heat between hydrogen in the first heat exchange conduit and the inert heat exchange medium in the second closed loop.

Advantageously, there is provided a system in which hydrogen in the main fuel conduit can be heated without a risk of the hydrogen coming into contact with air, which would otherwise risk forming a combustible mixture.

The fuel system may comprise a storage unit configured to store hydrogen fuel as a liquid, a supercritical fluid, or a cryogenically cooled gas.

Where the fuel is stored as a liquid the first heat exchanger may be configured to vaporise the fuel within the main fuel conduit.

The fuel system may comprise a fuel pump configured to pump fuel through the fuel conduit.

The fuel pump may be provided upstream in fuel flow of the first heat exchanger.

The fuel system may comprise a third heat exchanger configured to exchange heat between hydrogen in the first heat exchange loop and a further engine fluid.

The further engine fluid may comprise a lubricant such as engine oil.

The fuel system may comprise a fourth heat exchanger configured to exchange heat between the inert heat exchange medium in the second closed loop and a further cooling medium.

The further cooling medium may comprise air, and may comprise one of gas turbine core air, such as compressor bleed air or turbine cooling air, or may comprise fan bypass air, or may comprise gas turbine exhaust gases.

Where the further cooling medium comprises gas turbine exhaust gases, the fourth heat exchanger is in thermal communication with a gas turbine engine core turbine casing.

According to a second aspect there is provided a propulsion system comprising a gas turbine engine and a fuel system in accordance with the first aspect.

### BRIEF DESCRIPTION OF THE DRAWINGS

An embodiment will now be described by way of example only with reference to the accompanying drawings, which are purely schematic and not to scale, and in which:
Figure 1 shows a hydrogen-fuelled airliner comprising a propulsion system comprising hydrogen-fuelled turbofan engines;
Figure 2 is a block diagram of a fuel system of the propulsion system of the aircraft of figure 1;
Figure 3 is a block diagram of a first alternative fuel system of the propulsion system of the aircraft of figure 1; and
Figure 4 is a block diagram of a second alternative fuel system of the propulsion system of the aircraft of figure 1.

### DETAILED DESCRIPTION

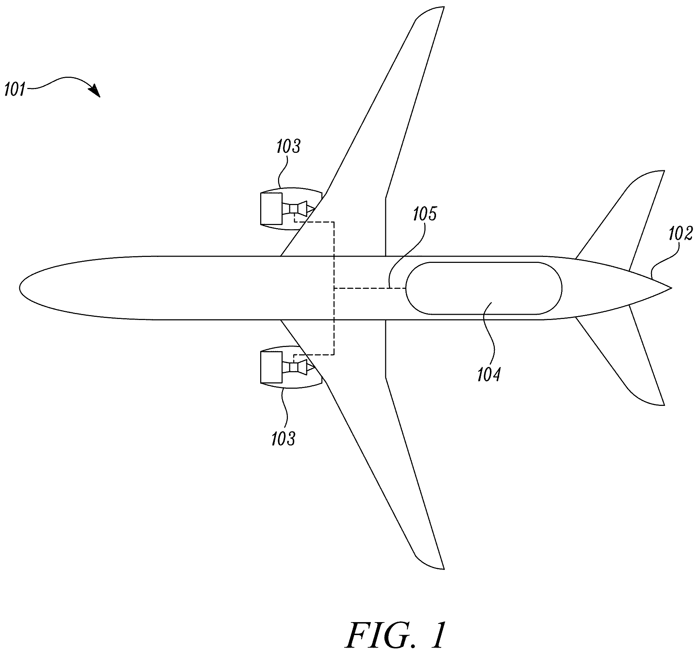

A hydrogen-fuelled airliner is illustrated in Figure 1. In this example, the airliner 101 is of substantially conventional tube-and-wing twinjet configuration with a central fuselage 102 and a propulsion system comprising substantially identical underwing-mounted turbofan engines 103.

A fuel storage tank 104 is located in the fuselage 102. The fuel storage tank 104 is a cryogenic fuel storage tank configured to store a cryogenic fuel, i.e. a fuel that would ordinarily be gaseous at room temperature and pressure, at a temperature below the freezing point of water. In the present embodiment, the fuel comprises hydrogen, and so the storage tank is a hydrogen storage tank 104 configured to store the hydrogen fuel in a liquid state, in a specific example at 22 Kelvin. In this example, the hydrogen fuel is pressurised to a pressure from around 1 bar to around 4 bar, in a specific example 4 bar. As will be appreciated, storing the hydrogen fuel at a higher pressure would necessitate heavier tanks to contain the pressure, and increase the risk of leaks. On the other hand, a lower pressure would reduce the boiling point of the hydrogen, requiring a lower temperature in the tank, and would risk cavitation and or two-phase flow in downstream hydrogen plumbing.

In alternative embodiments, the hydrogen may be stored as a compressed or supercritical fluid at high pressures and low temperatures. For example, the hydrogen may be stored at between 22 and 200 Kelvin, and at pressures between 100 and 300 Bar.

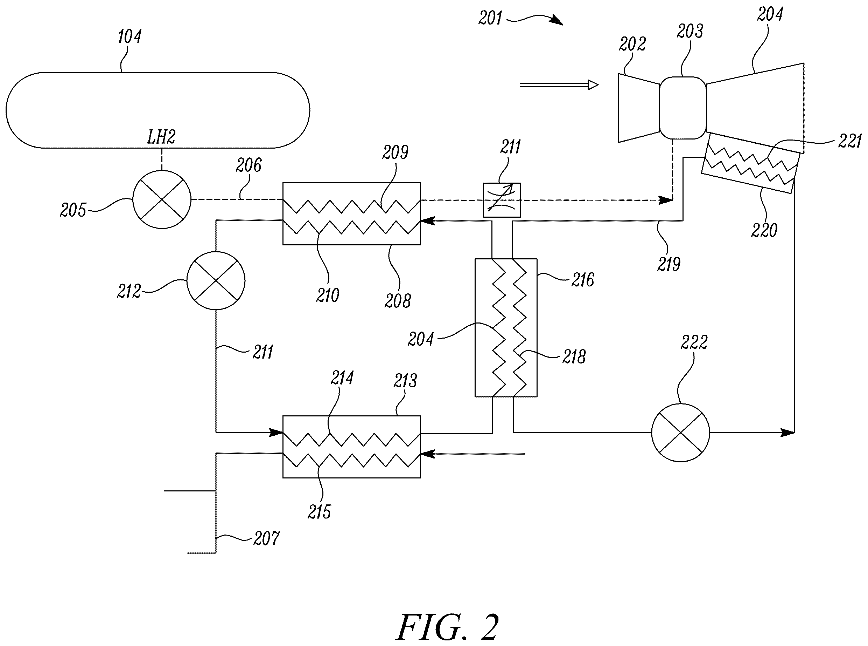

A block diagram of one of the propulsion systems comprising one of the engines 103 and its associated fuel system is shown in Figure 2.

The turbofan engine 103 comprises a core gas turbine 201.

The core gas turbine 201 comprises, in fluid flow series, at least one compressor 202 (and possibly separate low and high-pressure compressors), a core combustor 203 and a turbine system 204 (which typically comprises separate low and high-pressure turbines). The compressor 202 is driven by the turbine 204 via a shaft (not shown), or separate shafts where multiple compressors and turbines are provided. A fan (not shown) is typically provided to provide propulsive thrust in addition to that generated by the engine core. It will be appreciated that in alternative embodiments, the core gas turbine could be of three-shaft configuration, and / or could comprise a reduction gearbox between the turbine and fan.

In operation, hydrogen fuel is pumped from the hydrogen storage tank 104 by one or more pumps 205 and into a main fuel conduit 206 which ultimately delivers fuel to the core combustor 203. In the present embodiment, the pump 205 is driven by an electric machine. In other embodiments, the pump 205 may be driven by one or more of the gas turbine engine core shafts via an auxiliary gearbox (not shown). In some cases, a low-pressure pump 220 may also be provided, upstream of the high-pressure pump 205, and may be provided within the liquid hydrogen tank 104.

Where the tank 104 stores liquid hydrogen, the pump 205 is typically configured to pump liquid hydrogen, rather than primarily to pump gaseous or supercritical hydrogen. Where the tank 104 is configured to store gaseous hydrogen, the pump 205 is configured to pump gaseous hydrogen, or is omitted entirely. As such the pump 205 is provided upstream in fuel flow of one or more fuel heaters.

The gas turbine engine 201 also comprises an oil system. The oil system is configured to cool and / or lubricate various engine components such as engine bearings. As part of the oil system an oil conduit 207 is provided, which flows oil through the oil system.

As will be appreciated, significant heat is generated by the oil system, which must be rejected. Conventionally, this heat is rejected to the fuel via a Fuel Oil Heat Exchanger (FOHE) and to bypass air via an Air Oil Heat Exchanger (AOHE).

As will be appreciated, it is also desirable to increase the temperature of the fuel from the 22 Kelvin cryogenic storage condition to a temperature much closer to the firing temperature of the core gas turbine 201; of course, this is subject to the constraint of not exceeding the autoignition temperature of the hydrogen fuel prior to admission into the combustor 203. In an example, the injection temperature is from 250 to 300 kelvin, for example 250 kelvin. In some cases, it may be desirable to increase the fuel temperature to above an icing temperature, such as 273 Kelvin. It is also desirable to utilise waste heat from the gas turbine engine cycle as far as possible, in order to increase overall system efficiency.

Accordingly, a heat exchange system is provided for heating of the hydrogen fuel, and possibly to implement a phase change, and cooling of the oil system. In the present embodiment, this takes place between the pump 205 and the core combustor 203.

The inventors have found however that a single oil-fuel heat exchanger may result in undesirable behaviour during some stages of operation. It is desirable that all oil heat is rejected to fuel during operation, since heat rejected to the fuel is ultimately returned to the engine cycle, thereby increasing efficiency. The provision of oil-air heat exchangers also increases system weight and complexity.

However, during some stages of system operation, direct heat exchange between hydrogen at a temperature close to the storage temperature and oil may result in over-cooling of the oil in at least a portion of the oil passages, which may result in a higher than acceptable viscosity, or even freezing of the oil. This may in turn result in oil system blockages, or unacceptably low oil flow rates, or high oil pump backpressures.

The present embodiment seeks to address this system by employing a heat exchange system in accordance with figure 2.

The heat exchange system comprises a first heat exchanger 208. The first heat-exchanger 208 comprises a first heat exchange passage 209 through which cryogenic hydrogen fuel passes in a first pass through the heat exchanger. A second passage 210 is also provided within the first heat exchanger 208, which is similarly configured to flow hydrogen fuel and is in communication with a second hydrogen passage 211 which forms a first closed loop. As shown in figure 2, the two passages 209, 210 are arranged counter-flow, though the passages may be in co-flow relationship in some embodiments. Accordingly, heat exchange efficiency is improved, leading to a smaller, lighter heat exchanger, while the thermal gradient is minimised, reducing thermal stresses. The first heat exchanger 208 is configured to exchange heat between the cryogenic hydrogen fuel at an inlet to the first passage 209, and the relatively warmer gaseous hydrogen fuel at the inlet to the second passage 210. In the present embodiment, fuel is also vaporised within the first passage 209. Warmed hydrogen fuel is then provided to the main gas turbine engine combustor 203 via a fuel metering valve 211.

Referring now to the closed gaseous hydrogen fuel loop, a gaseous hydrogen pump 212 is provided to drive hydrogen fuel through the first closed loop. The gaseous hydrogen pump 212 may be of a different type to the main fuel pump 205, as this must pump gaseous fuel rather than liquid fuel. Additionally, the gaseous fuel will typically be at a lower pressure in operation than the fuel downstream of the main fuel pump 205, and the flow rate may also be different. In the present disclosure, the pump 212 is provided downstream of the first heat exchanger 208, but may be located in a different part of the cycle.

An optional third heat exchanger 213 is provided downstream in hydrogen fuel flow of the second passage 210 of the first heat exchanger 208 and typically also downstream of the gaseous hydrogen pump 212 in closed loop 211 hydrogen flow. The third heat exchanger 213 comprises a first fuel passage 214, and a further engine fluid passage in the form of an engine oil passage 215. As will be appreciated, in alternative embodiments the further engine fluid could comprise a different engine fluid, such as engine hydraulic fluid or engine cooling air.

The third heat exchanger 213 is configured to exchange heat between engine oil in the engine oil passage 207 and hydrogen fuel in the closed hydrogen loop via the first fuel passage 214. The hydrogen in the first passage 214 of the second heat exchanger 211 has been warmed by passage through the first heat exchanger, but is still at a lower temperature than the oil, and so heat is transferred from the oil to the hydrogen. However, in view of the raised temperature of the hydrogen relative to the storage condition, overcooling of the oil in the second heat exchanger is prevented compare to systems where the cryogenic fuel is used to cool the oil directly. Accordingly, the system provides for efficient regulation of both oil and fuel temperature, without a risk of overcooling of the oil. Again, the third heat exchanger 213 operates in counter-flow with the hydrogen and oil, thereby improving heat exchange efficiency and reducing thermal stresses.

A second heat exchanger 216 is provided downstream in closed loop hydrogen flow of the second heat exchanger 213. The third heat exchanger comprises a first passage 217 in communication with the closed loop hydrogen conduit 211 and configured to flow warmed hydrogen through the third heat exchanger 216. A second passage 218 within the third heat exchanger 216 is configured to flow an inert heat exchange fluid with a conduit 219 of a second closed loop, fluidically separate to the first closed loop. Accordingly, the third heat exchanger is configured to exchange heat between gaseous hydrogen in the first closed loop with inert heat exchange fluid in the second closed loop, for reasons that will be explained below. Again, the second heat exchanger 216 operates in counterflow.

The inert heat exchange fluid is one that does not react with either oxygen or hydrogen and remains a fluid at typical temperatures and pressures to which the inert heat exchange fluid is subjected. For example, nitrogen may be used, since nitrogen is inert with respect to both hydrogen and oxygen and remains a fluid (either liquid or gas) at expected operating temperatures.

An inert heat exchange fluid pump 222 is provided, which is configured to pump inert heat exchange fluid through the conduit 219 and is provided downstream in inert heat exchange fluid flow of the heat exchanger 216.

Referring now to the inert heat exchange fluid conduit 219 flow, a fourth heat exchanger 220 is provided downstream in inert heat exchange fluid flow of the second heat exchanger 216. This fourth heat exchanger is configured to exchange heat between engine air and the inert heat exchange fluid. In the embodiment shown in figure 2, the engine air comprises core engine air, specifically core turbine exhaust air. The fourth heat exchanger 220 is in thermal contact with a core exhaust casing 221, which transmits waste heat from the engine to the inert heat exchange fluid. Ultimately, this heat is transferred to the engine fuel via the second and first heat exchangers 216, 209, and thus waste heat is returned to the engine cycle. Once more, the fourth heat exchanger 220 operates in counter-flow.

Accordingly, a fuel and oil system is provided, which regulates both fuel and oil temperature during use, without resulting in extreme conditions in either fluid. The system can optionally also be used to regulate the temperature of alternative or additional systems, such as the turbine exhaust casing. Since fuel flow correlates relatively well with oil flow, and since a relatively wide range of fuel temperatures can be tolerated, the system is typically self-regulating, needing little or no active control. The system also enables the use of other sources of waste heat such as core gas turbine air to heat the fuel, without a risk of fire, since an inert intermediate heat exchange fluid is used between the engine air and flammable fuel.

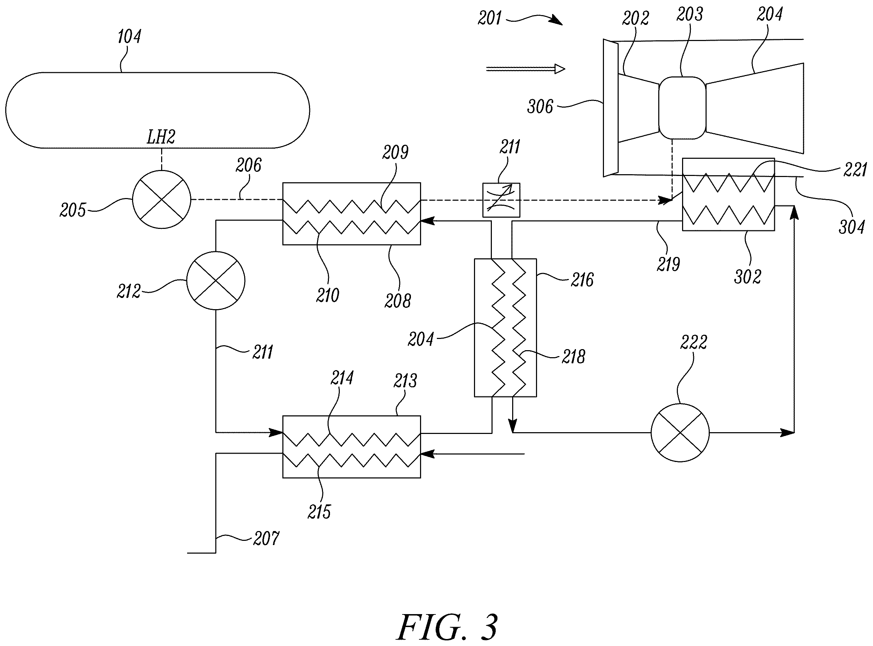

Figure 3 illustrates an alternative configuration of the fuel system.

In this embodiment, the fourth heat exchanger 302 is configured to exchange heat between the inert heat exchange fluid in the conduit 219 and bypass air within a bypass duct 304. The bypass duct 304 is provided with low-pressure, relatively low-temperature air from a bypass fan 306, which is driven by the core engine. In this embodiment, lower temperature air is used as a heat sink than in the first embodiment. However, sufficient heat may still be available to provide a significant temperature rise to the fuel.

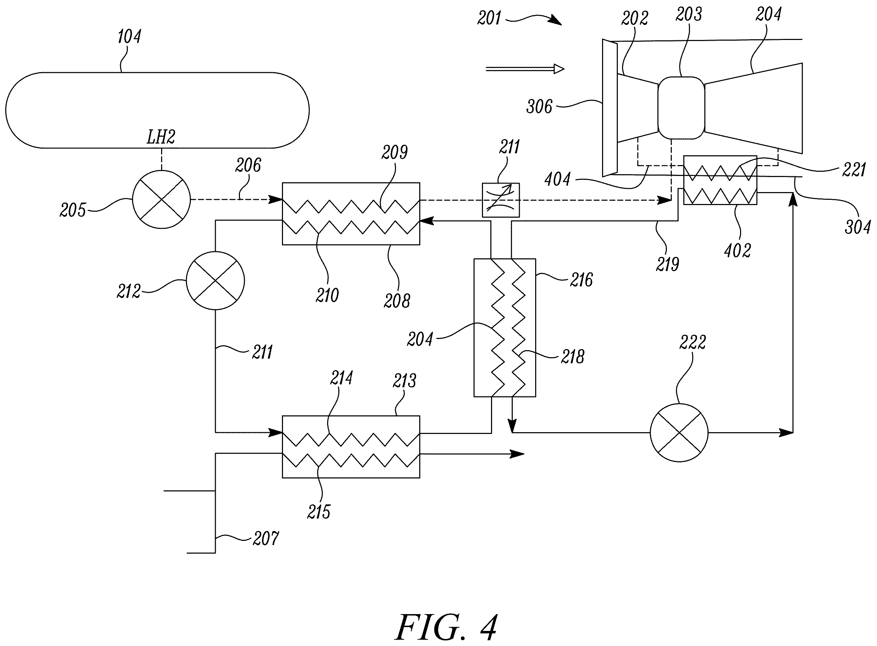

Figure 4 illustrates a further alternative configuration of the fuel system.

In this embodiment, the fourth heat exchanger 402 is configured to exchange heat between the inert heat exchange fluid in the conduit 219 and compressor bleed air in a compressor bleed air line 404. The fourth heat exchanger is provided with high-pressure, relatively high-temperature compressor bleed air from the compressor 202, which is then cooled by the fourth heat exchanger 402, and provided to a user. In this embodiment, the user comprises a gas turbine engine core component, such as a turbine bleed. As such, lower temperature core cooling air is provided, which reduces a mass-flow requirement for the compressor bleed. Alternatively, the bleed air user may comprise "customer bleed air", e.g. cabin air. Again, lower temperature bleed air is provided for the cabin, while waste heat is usefully employed to heat fuel, and thereby provide it to the engine cycle.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

Changes may be made to the disclosed embodiment without departing from the invention as defined by the claims. For example, an auxiliary heater may be provided, which may be configured to provide further heat to the fuel where insufficient heat is available from the oil and / or engine air to provide the required fuel temperature. Suitable auxiliary heaters include electric heater or auxiliary combustors. Similarly, the gas turbine engine could be of a different form, and could comprise two or even three shafts, with associated compressors and turbines. Examples include turboprop engines, turbojet engines, and hybrid electric gas turbine engines. Similarly, the aircraft could be of a different configuration. Options include aircraft with rear-fuselage mounted engines, and blended wing-body aircraft. The embodiments of figures 2 and 3 could be combined, for example by providing both an inert heat exchange fluid to core exhaust air heat exchanger, in addition to an inert heat exchange fluid to bypass air heat exchanger.

## Claims

1. A fuel system for an aircraft gas turbine engine (201), the fuel system comprising:
a main fuel conduit (206) configured to deliver hydrogen fuel to a combustor (203) of the gas turbine engine (201);
a first heat exchange conduit (211) configured to circulate gaseous hydrogen in a first closed loop;
a second heat exchange conduit (219) configured to circulate an inert heat exchange medium in a second closed loop;
a first heat exchanger (208) configured to exchange heat between hydrogen in the main fuel conduit (206) and hydrogen (211) in the first heat exchange conduit; and
a second heat exchanger (216) configured to exchange heat between hydrogen in the first heat exchange conduit (206) and the inert heat exchange medium in the second closed loop.

2. A fuel system according to claim 1, wherein the fuel system comprises a storage unit (104) configured to store hydrogen fuel as a liquid, a supercritical fluid, or a cryogenically cooled gas.

3. A fuel system according to claim 2, wherein where the fuel is stored as a liquid, the first heat exchanger (208) is configured to vaporise the fuel within the main fuel conduit (206).

4. A fuel system according to any of the preceding claims, wherein the fuel system comprises a fuel pump (205) configured to pump fuel through the fuel conduit (206).

5. A fuel system according to claim 4, wherein the fuel pump is provided upstream in fuel flow of the first heat exchanger (208).

6. A fuel system according to any of the preceding claims, wherein the fuel system comprise a third heat exchanger (213) configured to exchange heat between hydrogen in the first heat exchange loop and a further engine fluid.

7. A fuel system according to claim 6, wherein the further engine fluid comprises a lubricant such as engine oil.

8. A fuel system according to any of the preceding claims, wherein the fuel system comprise a fourth heat exchanger (220) configured to exchange heat between the inert heat exchange medium in the second closed loop and a further cooling medium.

9. A fuel system according to claim 8, wherein the further cooling medium comprises air, and may comprise one of gas turbine core air, such as compressor bleed air or turbine cooling air, or may comprise fan bypass air, or may comprise gas turbine exhaust gases.

10. A fuel system according to claim 9, wherein the further cooling medium comprises gas turbine exhaust gases, the fourth heat exchanger (220) is in thermal communication with a gas turbine engine core turbine casing (221).

11. A propulsion system comprising a gas turbine engine and a fuel system in accordance with any of the preceding claims.
